(19) Europäisches Patentamt
European Patent Office
Office européen des brevets

(11) **EP 1 309 130 B1**

(12) **FASCICULE DE BREVET EUROPEEN**

(45) Date de publication et mention
de la délivrance du brevet:
**27.02.2008 Bulletin 2008/09**

(51) Int Cl.:
*H04L 12/44* (2006.01)    *H04L 12/413* (2006.01)
*H04L 12/46* (2006.01)    *H04L 12/56* (2006.01)

(21) Numéro de dépôt: **02292704.0**

(22) Date de dépôt: **30.10.2002**

(54) **Reseau de communication de type ethernet full duplex commute et procede de mise en oeuvre de celui-ci**

Geschaltetes vollduplex-Ethernet Kommunikationsnetz und Verfahren dafür

Switched full duplex ethernet network and method of operating thereof

(84) Etats contractants désignés:
**DE ES GB IT**

(30) Priorité: **05.11.2001 FR 0114263**

(43) Date de publication de la demande:
**07.05.2003 Bulletin 2003/19**

(73) Titulaire: **AIRBUS France**
**31060 Toulouse Cedex 03 (FR)**

(72) Inventeurs:
- **Saint Etienne, Jean-Francois**
  **31270 Cugnaux (FR)**
- **Lopez, Juan**
  **31300 Toulouse (FR)**
- **Portes, Dominique**
  **31320 Auzeville Tolosane (FR)**
- **Gambardella, Eddie**
  **31700 Blagnac (FR)**
- **Pasquier, Bruno**
  **31530 Thil (FR)**
- **Almeida, Philippe**
  **31270 Cugnaux (FR)**

(74) Mandataire: **Poulin, Gérard et al**
**BREVALEX**
**3, rue du Docteur Lancereaux**
**75008 Paris (FR)**

(56) Documents cités:
**EP-A- 0 835 009**        **WO-A-99/53719**

- **RINDOS A ET AL: "A performance evaluation of emerging Ethernet technologies: switched/high-speed/full-duplex Ethernet and Ethernet LAN emulation over ATM" SOUTHEASTCON '96. BRINGING TOGETHER EDUCATION, SCIENCE AND TECHNOLOGY., PROCEEDINGS OF THE IEEE TAMPA, FL, USA 11-14 APRIL 1996, NEW YORK, NY, USA,IEEE, US, 11 avril 1996 (1996-04-11), pages 401-404, XP010163567 ISBN: 0-7803-3088-9**

**Description**

**Domaine technique**

La présente invention concerne un réseau de communication de type Ethernet full duplex commuté et un procédé de mise en oeuvre de celui-ci, notamment dans le domaine avionique

**Etat de 1a technique antérieure**

Le réseau Ethernet, qui est la référence dans le monde des réseaux de communication, permet d'envoyer des données sous forme numérique par paquets, ou "trames", un paquet étant défini comme un ensemble de données envoyé en une seule fois sur le réseau.

Dans un réseau Ethernet, les données de chaque paquet ne sont pas interprétées. Le réseau les transporte sans connaître leur signification. Un paquet est constitué de deux types de données, des données réseaux qui sont utilisés pour acheminer le paquet à bon port et des données utiles qui sont la "charge utile" du paquet.

Un réseau Ethernet est constitué d'équipements, qui sont abonnés au réseau, connectés entre eux par l'intermédiaire d'un moyen de communication formé d'équipements actifs appelés commutateurs, qui ont trois rôles :

- connecter les abonnés du réseau en mode point à point via des liens physiques, qui sont les supports physiques qui permettent le transfert des messages, par exemple des câbles en paire torsadée,
- acheminer (commuter) les paquets émis par des équipements sources vers un ou des équipements destinataires,
- vérifier l'intégrité du paquet Ethernet et son format.

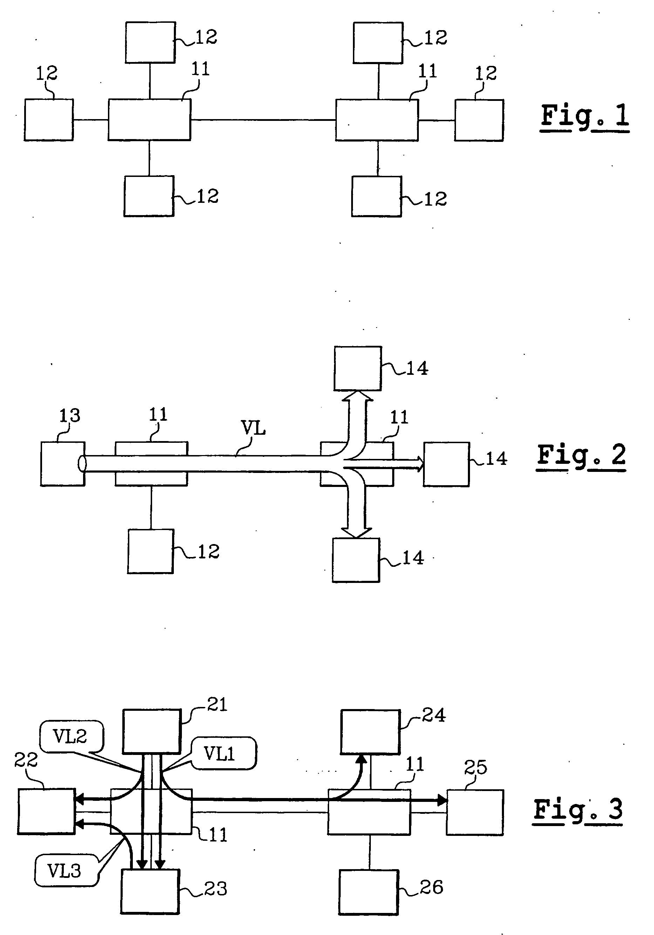

La figure 1 illustre un réseau Ethernet constitué de deux commutateurs 11 interconnectés entre eux et reliés chacun à trois équipements abonnés 12 en mode point à point.

Le fonctionnement d'un tel réseau est simple. Chaque abonné du réseau peut émettre des paquets à tout moment sous forme numérique vers un, ou plusieurs autres abonnés. Lorsque les paquets sont reçus par un commutateur, les données "information réseau" sont analysées pour connaître le ou les équipements destinataires. Les paquets sont alors commutés vers ces équipements.

Dans la désignation "réseau de type Ethernet full duplex commuté" :

- le terme "full duplex" signifie que l'abonné peut émettre et recevoir en même temps sur la même liaison,
- le terme "commuté" signifie que les paquets sont commutés dans les commutateurs sur les sorties appropriées.

Un tel réseau peut être, par exemple, un réseau de type 100 Mbit/s full duplex commuté sur paire torsadée ; le terme "paire torsadée" indiquant que les liaisons entre les équipements et les commutateurs sont constituées de deux paires de câbles, chaque paire étant torsadée ; le terme 100 Mbit/s indiquant simplement la vitesse d'émission ou de réception des paquets sur le réseau.

La technologie Ethernet impose :

- une taille minimum et une taille maximum sur les paquets,
- une identification de la source et du ou des destinataires dans chaque paquet,
- un CRC (ou "cyclic redundancy check") qui permet de vérifier l'intégrité des données transportées.

Actuellement, dans le domaine de l'aéronautique civile, les échanges de données entre les différents calculateurs embarqués sont basés sur l'utilisation du standard aéronautique ARINC 429.

Le réseau Ethernet full-duplex commuté est, par contre, utilisé couramment dans le domaine industriel. L'émergence de nouvelles technologies de communication fait apparaître un tel réseau comme une solution ouverte et normalisée (IEEE Standard 802.3) avec un fort potentiel de développement en tant que réseau local. Mais, une telle solution ne dispose pas des moyens pour garantir la ségrégation et les performances de transfert (en terme d'accès au réseau, latence, ...) nécessaires aux applications avioniques.

La demande de brevet EP 0 835 009 décrit un système qui définit un lien virtuel dédié pour un flux de paquet spécifié entre un équipement source et un équipement destinataire. Le fait que le transfert d'un paquet puisse être effectué en utilisant un lien virtuel peut dépendre de plusieurs conditions, par exemple du fait que les paquets vont à une adresse de destination IP spécifique. Il est envisagé de déterminer une largeur de bande adéquate pour chaque flux IP correspondant à chaque lien virtuel (DVL) en allouant exclusivement une connexion virtuelle (ATM-VC) et en réservant la largeur de bande pour celui-ci.

La demande de brevet WO 99 53719 décrit un procédé pour adapter des infrastructures LAN à commutation de paquets, par exemple de type Ethernet, de façon à fournir des services de commutation à circuits virtuels à largeur de bande réservée en plus de leurs capacités conventionnelles. Une requête pour une connexion par circuit virtuel comprend la station d'extrémité qui fait la requête, la station d'extrémité à laquelle une connexion réservée est requise, et la largeur de bande et/ou la qualité de service requise. Lorsqu'une telle requête est formulée, le contrôleur de connexion parcourt la liste des chemins disponibles entre les stations d'extrémité de la connexion requise. Il détermine alors la capacité totale du chemin en déterminant si la largeur de bande minimale disponible à travers chaque lien, commutateur, port de commutation et station d'extrémité dans le chemin, tel que mémorisé, est suffisante pour remplir la largeur de bande et/ou la qualité de service requises pour la connexion.

La présente invention a pour objectif de proposer un réseau type Ethernet full-duplex commuté et un procédé de mise en oeuvre de celui-ci, qui garantissent une ségrégation des données et une limite de leur temps de transfert, de manière à permettre une application dans le domaine avionique.

**Exposé de l'invention**

L'invention concerne un réseau Ethernet de type full-duplex commuté comprenant au moins un équipement abonné source et au moins un équipement abonné destinataire reliés entre eux par au moins un lien physique au travers d'au moins un commutateur et par au moins un lien virtuel qui est la représentation conceptuelle d'une liaison d'un équipement source vers au moins un équipement destinataire, caractérisé en ce chaque équipement source, émetteur de trames Ethernet, comporte :

- des moyens de ségrégation entre les liens virtuels et d'allocation d'une bande passante par lien virtuel,
- des moyens de multiplexage des liens virtuels sur le lien physique issu de cet équipement, chaque trame émise possédant un champ qui identifie le lien virtuel auquel elle appartient,

et en ce qu'un lien virtuel est caractérisé par :

- un sens de transfert, le lien virtuel étant mono-directionnel,
- un équipement source,
- un ou plusieurs équipements destinataires,
- une bande passante figée,
- un temps maximum garanti de transfert des paquets d'un équipement source vers un équipement destinataire, quel que soit le comportement du reste du réseau, chaque lien virtuel ayant son propre temps de transfert,
- un chemin figé sur le réseau,
- un identifiant unique.

Avantageusement chaque équipement destinataire comporte des moyens pour s'abonner en réception a au moins un lien virtuel et d'assurer la ségrégation entre liens virtuels jusqu'à l'application.

Avantageusement chaque commutateur comprend des moyens de contrôle de bande passante entrante pour chaque lien virtuel. Il connaît, par une table de configuration statique, les liens virtuels qu'il doit commuter ainsi que le nombre de paquets autorisés pour un lien virtuel. Il comprend :

- des moyens pour configurer de façon séparée chaque port d'entrée afin d'indiquer pour chaque trame Ethernet reçue vers quels ports de sortie elle doit être dirigée en fonction de l'identifiant du lien virtuel,
- des moyens pour surveiller le flux de trames Ethernet associé à chaque lien virtuel qui traverse le commutateur,
- des moyens pour remettre en forme le flux de chaque lien virtuel,
- des moyens de multiplexage des flux des liens virtuels sur chaque port de sortie.

Dans un exemple de réalisation chaque commutateur comprend successivement :

- un port d'entrée,
- des moyens de contrôle de flux,
- un moteur de commutation supportant des transferts multidestinataires,
- des moyens de contrôle de flux,
- des moyens de remise en forme de flux,
- des moyens de multiplexage des liens virtuels,
- un port de sortie.

Dans un mode de réalisation avantageux on réalise une redondance réseau, qui consiste à doubler le réseau, chaque abonné ayant une connexion à chacun des deux réseaux.

L'invention concerne également un procédé de mise en oeuvre d'un réseau de communication de type Ethernet full-duplex commuté comprenant des équipements abonnés sources et destinataires reliés entre eux par au moins un lien physique au travers d'au moins un commutateur et par au moins un lien virtuel qui est la représentation conceptuelle d'une liaison d'un équipement source vers au moins un équipement destinataire, dans lequel dans un service d'émission, on permet à une application d'accéder aux liens virtuels en émission , ce service permettant de multiplexer les liens virtuels vers le lien physique au travers d'un interface Ethernet et pour chaque lien virtuel d'émettre les paquets en fonction de la bande passante allouée à celui-ci. Dans un service de réception, on peut décoder les paquets, on vérifie leur bon format et on met à disposition des applications les données utiles. Dans un service de protection de bande passante dans le commutateur, pour chaque lien virtuel entrant, on vérifie les caractéristiques temporelles des paquets et en cas de dépassement des caractéristiques permises, on détruit les paquets pour éviter qu'une défaillance au niveau d'un émetteur ou d'un lien virtuel ne vienne compromettre le trafic dans les autres liens virtuels partant de ce commutateur. Un lien virtuel est caractérisé par :

- un sens de transfert, le lien virtuel étant mono-directionnel,
- un équipement source,
- un ou plusieurs équipements destinataires,
- une bande passante figée,
- un temps maximum garanti de transfert des paquets d'un équipement source vers un équipement destinataire, quel que soit le comportement du reste du réseau, chaque lien virtuel ayant son propre temps de transfert,
- un chemin figé sur le réseau,
- un identifiant unique.

Avantageusement dans un service de redondance réseau au niveau abonné, on envoie et on reçoit un paquet sur deux liens virtuels afin de mettre en oeuvre une redondance réseau, la duplication du réseau, qui est transparente pour les applications, permettant ainsi de se prémunir d'une panne d'un commutateur ou d'une interface.

Avantageusement dans un service "sampling", le terminal destinataire ne présente à l'utilisateur que la dernière valeur reçue, et dans lequel, on écrase systématiquement la dernière valeur par le nouveau paquet reçu. Dans un service "queueing" l'équipement destinataire présente à l'utilisateur toutes les données qu'il reçoit, ce service permettant :

- un envoi d'informations que le destinataire ne veut pas perdre,
- un envoi de données supérieur à la taille maximum du paquet du lien virtuel, le service en émission découpant alors ces données en paquet, le service réception reformant les données pour le mettre à disposition de l'application réceptrice.

Dans un service de "transfert de fichier", on transfère un fichier de données, le service d'émission découpant ce fichier en paquets qui sont ensuite transmis séquentiellement, le service de réception reconstruisant ce fichier.

Avantageusement on affecte une bande passante et un temps inter-paquet pour chaque lien virtuel.

Dans un mode de réalisation avantageux, sur un même lien virtuel, un abonné en réception affine la sélection des paquets en utilisant les informations d'adressage réseaux contenues dans le paquet.

Avantageusement l'intégrité des données étant assurée sur chaque paquet par un CRC qui permet par un calcul de valider les données transmises dans le paquet, on vérifie chaque paquet à chaque entrée d'équipement du réseau, et on détruit tout mauvais paquet afin qu'il ne soit pas utilisé, afin de libérer de la bande passante et afin d'éviter d'encombrer inutilement les commutateurs.

**Brève description des dessins**

- La figure 1 illustre un réseau Ethernet de l'art connu,
- la figure 2 illustre le concept de lien virtuel dans un réseau Ethernet selon l'invention,
- la figure 3 illustre un réseau Ethernet dans lequel sont mis en évidence plusieurs liens virtuels selon l'invention,
- les figures 4A et 4B illustrent les moyens composant un équipement, respectivement en émission et en réception, du réseau de l'invention,
- la figure 5 illustre les différents éléments constituant un commutateur du réseau de l'invention,
- les figures 6 et 7 illustrent différents services mis en oeuvre dans le réseau de l'invention,
- la figure 8 illustre l'emplacement des services "sampling", queueing" et "transfert de fichier" vis-à-vis de l'application et des services de liens virtuels, tels qu'illustrés sur les figures 6 et 7, dans le réseau de l'invention,

- la figure 9 illustre deux exemples de répartition de paquets dans une séquence,
- la figure 10 illustre la fonction de filtrage dans un lien virtuel en réception selon l'invention,
- la figure 11 illustre un exemple de temps de transfert pour un lien virtuel VL1 selon l'invention,
- la figure 12 illustre un exemple de vérification du paquet du lien virtuel VL1 de la figure 11 selon l'invention,
- la figure 13 illustre la décomposition de la charge utile d'un paquet dans un exemple de mise en oeuvre du réseau de l'invention.

**Exposé détaillé de modes de réalisation**

Le réseau Ethernet full-duplex commuté de l'invention utilise le concept de lien virtuel pour borner le temps de transfert de bout en bout, c'est-à-dire d'un équipement source vers un ou plusieurs équipements destinataires.

Concept de lien virtuel

Ce concept de lien virtuel (VL) permet d'isoler les transferts de données entre un équipement source 13 et des équipements destinataires 14. Le lien virtuel VL est vu comme un "tuyau" sur le réseau, comme illustré sur la figure 2.
Un lien virtuel VL est caractérisé par :

- un sens de transfert, le lien virtuel étant mono-directionnel,
- un équipement source unique 13,
- un ou plusieurs équipements destinataires 14,
- une bande passante (nombre maximum de paquets et leur taille par seconde) figée,
- un temps maximum garanti de transfert des paquets d'un équipement source 13 vers un équipement destinataire 14, quel que soit le comportement du reste du réseau, chaque lien virtuel ayant son propre temps de transfert,
- un chemin figé sur le réseau,
- un identifiant unique.

Un abonné du réseau peut comporter plusieurs liens virtuels VL1, VL2, VL3, comme illustré sur la figure 3. On a en effet :

- un lien virtuel VL1 allant de l'équipement 21 vers les équipements 23, 24 et 25,
- un lien virtuel VL2 allant de l'équipement 21 vers les équipements 22 et 23,
- un lien virtuel VL3 allant de l'équipement 23 vers l'équipement 22.

Lorsque l'équipement 21 veut envoyer un paquet vers les équipements 23, 24 et 25, il émet un paquet sur le lien virtuel VL1. Lorsqu'il veut émettre un paquet vers les équipements 22 et 23, il émet un paquet sur le lien virtuel VL2.
La différence entre les liens virtuels VL1 et VL2 se fait par l'identifiant de destination dans le paquet. Sur le réseau, l'appartenance d'un paquet à un lien virtuel se fait par l'identificateur du lien virtuel dans le paquet.
Un commutateur connaît, par une table de configuration statique, les liens virtuels qu'il doit commuter ainsi que le nombre de paquets autorisés pour un lien virtuel.
Le concept de lien virtuel permet de figer les communications entre les équipements en configurant les routes et les bandes passantes allouées aux liens virtuels. Ainsi, le flux formé par un lien virtuel est assuré de ne pas être perturbé par les autres flux partageant les mêmes liens physiques tout au long de sa route dans le réseau.
D'autre part, le concept de lien virtuel permet, par une gestion centralisée des flux, de s'assurer que la somme des bandes passantes allouées aux liens virtuels sur un même lien physique ne dépasse pas les capacités de la technologie de celui-ci. Dans l'exemple ci-dessus, la somme des bandes passantes des liens virtuels VL1 et VL2 doit être inférieure à la capacité du lien physique en émission de l'équipement 21.
Dans le réseau de l'invention, chaque équipement comprend :

- des moyens 32 qui définissent, en émission, des liens virtuels et qui allouent des bandes passantes en assurant leurs ségrégations.
- des moyens 33 qui séquencent, en émission, l'accès des liens virtuels au lien physique,
- des moyens 34 qui permettent, en réception, de s'abonner à un ou plusieurs liens virtuels et qui assurent une ségrégation entre les liens virtuels jusqu'à l'application.

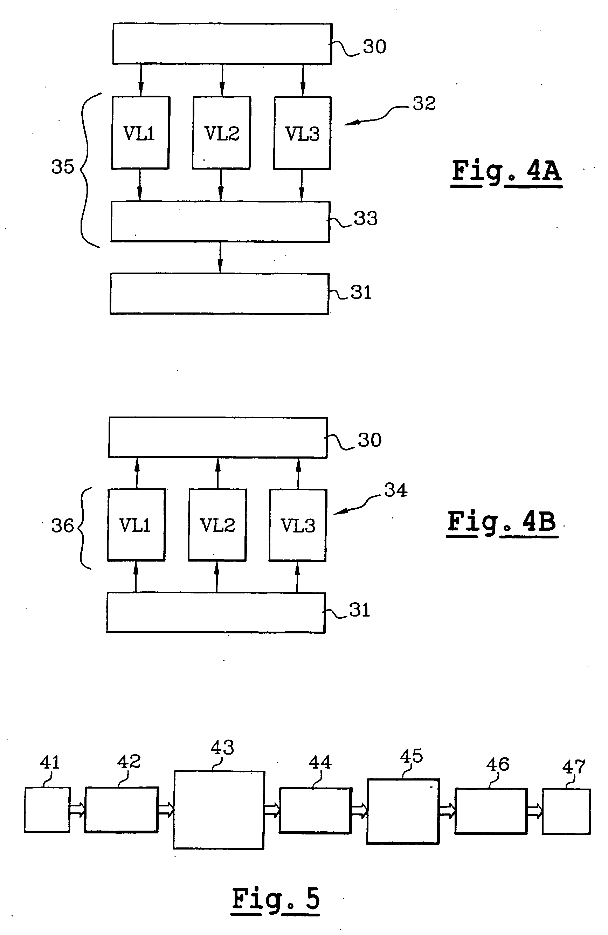

Les figures 4A et 4B représentent de tels moyens respectivement en émission et en réception entre une application 30 et un contrôleur Ethernet couche physique 31 ; l'ensemble des moyens 32 et 33 formant une pile de communication 35 et les moyens 34 formant une pile de communication 36.

Dans le réseau de l'invention, chaque commutateur comprend :

- des moyens pour configurer de façon séparée chaque port d'entrée afin d'indiquer pour chaque trame Ethernet reçue vers quels ports de sortie elle doit être dirigée en fonction de l'identifiant du lien virtuel,
- des moyens pour surveiller le flux de trames Ethernet associé à chaque lien virtuel qui traverse le commutateur,
- des moyens pour remettre en forme le flux de chaque lien virtuel (ré-espacement des trames pour chaque lien virtuel),
- des moyens de multiplexage des flux des liens virtuels sur chaque port de sortie.

Comme illustré sur la figure 5, un tel commutateur comprend donc successivement :

- un port d'entrée 41,
- des moyens de contrôle de flux 42,
- un moteur de commutation supportant des transferts multidestinataires 43,
- des moyens de contrôle de flux 44,
- des moyens de remise en forme de flux 45,
- des moyens de multiplexage des liens virtuels 44,
- un port de sortie 47.

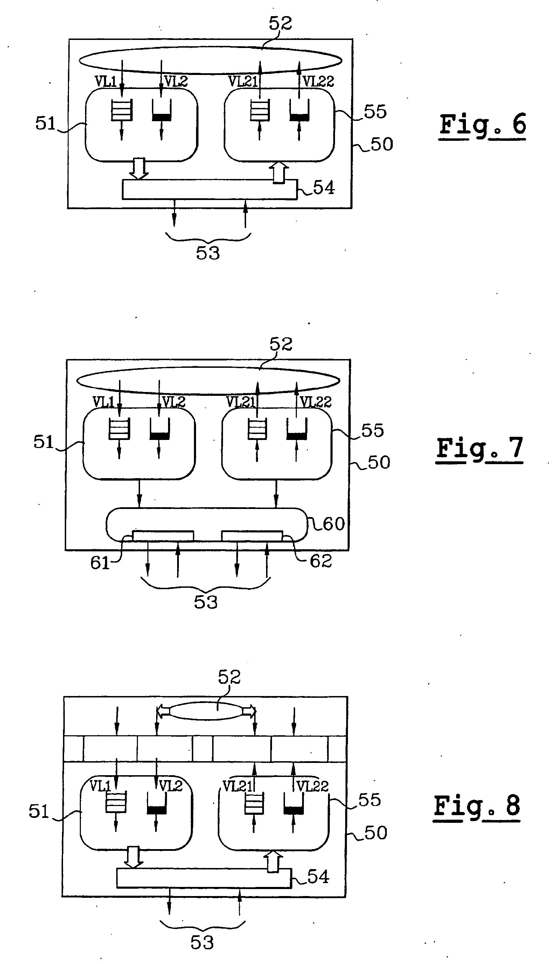

Ainsi, comme illustré sur la figure 6, le réseau de l'invention est caractérisé par la mise en oeuvre de plusieurs services, ou moyens, dans chacun des équipements abonné 50 :

- Un service d'émission, dont le rôle est de permettre à une application 52 d'accéder aux liens virtuels en émission. Ce service permet de multiplexer les liens virtuels vers le lien physique 53 au travers d'un interface Ethernet 54 et pour chaque lien virtuel d'émettre les paquets en fonction de la bande passante allouée à celui-ci.
- Un service de réception 55 qui permet de décoder les paquets, de vérifier leur bon format et de mettre à disposition des applications les données utiles.

Dans ces services d'émission et de réception, le lien virtuel peut être représenté, vu l'application, comme une file d'attente.

D'autres services de protection permettent de se prémunir de certaines défaillances du réseau :

- Un service de protection de bande passante dans le commutateur, qui permet, pour chaque lien virtuel entrant, de vérifier les caractéristiques temporelles des paquets (l'espacement entre paquets, la bande passante consommée). En cas de dépassement des caractéristiques permises, les paquets sont simplement détruits, pour éviter qu'une défaillance au niveau d'un émetteur ou d'un lien virtuel ne vienne compromettre le trafic dans les autres liens virtuels partant de ce commutateur.
- Un service 60 de redondance réseau au niveau abonné, qui permet d'envoyer et de recevoir un paquet sur deux liens virtuels afin de mettre en oeuvre une redondance réseau. La duplication du réseau, qui est transparente pour les applications, permet ainsi de se prémunir d'une panne d'un commutateur ou d'une interface (elle ne remplace pas la redondance de niveau système). Comme illustré sur la figure 7, on trouve en plus des services d'émission et de réception 51 et 55 de la figure 6, un service de redondance réseau émission réception 60, qui est relié à un premier interface Ethernet 61 et à un second interface Ethernet 62.

Modes d'émission et de réception

Trois services supplémentaires peuvent être fournis par l'interface de communication aux applications au niveau de l'abonné :

- "Sampling" : l'équipement destinataire ne présente à l'utilisateur que la dernière valeur reçue. En réception on écrase systématiquement la dernière valeur par le nouveau paquet reçu. Ce service est bien adapté pour recevoir des informations périodiques.
- "Queueing" : l'équipement destinataire présente à l'utilisateur toutes les données qu'il reçoit, même si le récepteur ne les lit pas assez rapidement. Ce service permet :

  - un envoi d'informations que le destinataire ne veut pas perdre (tous les paquets sont lus),
  - un envoi de données supérieur à la taille maximum du paquet du lien virtuel. Le service d'émission découpe alors ces données en paquet. Le service de réception reforme les données pour le mettre à disposition de l'application réceptrice.

- "Transfert de fichier" : ce service permet de transférer un fichier de données. Le service d'émission le découpe en paquets qui sont ensuite transmis séquentiellement. Le service de réception reconstruit le fichier. De plus il assure une reprise sur erreur (par exemple dans le cas d'un téléchargement de données).

La figure 8 indique l'emplacement de ces services vis-à-vis des applications et des services des liens virtuels, en reprenant les références de la figure 6.

Transmission de paquets sur un lien virtuel

L'invention ne concerne pas uniquement la définition des liens virtuels, qui sont utilisés dans les équipements pour émettre et recevoir des données. Elle concerne également une utilisation particulière de la bande passante allouée, ainsi que des fonctions de sous-filtrage en réception dans un lien virtuel.

1) La bande passante allouée et le temps inter-paquet

La bande passante allouée est définie comme le nombre de paquets envoyés par seconde et la taille ce ceux-ci. Mais cette définition est incomplète car la bande passante ne donne pas la répartition dans le temps de ces paquets. Il faut également préciser le temps minimum à respecter entre deux paquets. Ce temps minimum inter-paquet (TIP) donne la bande passante maximum du lien virtuel pour une taille de paquet donnée.

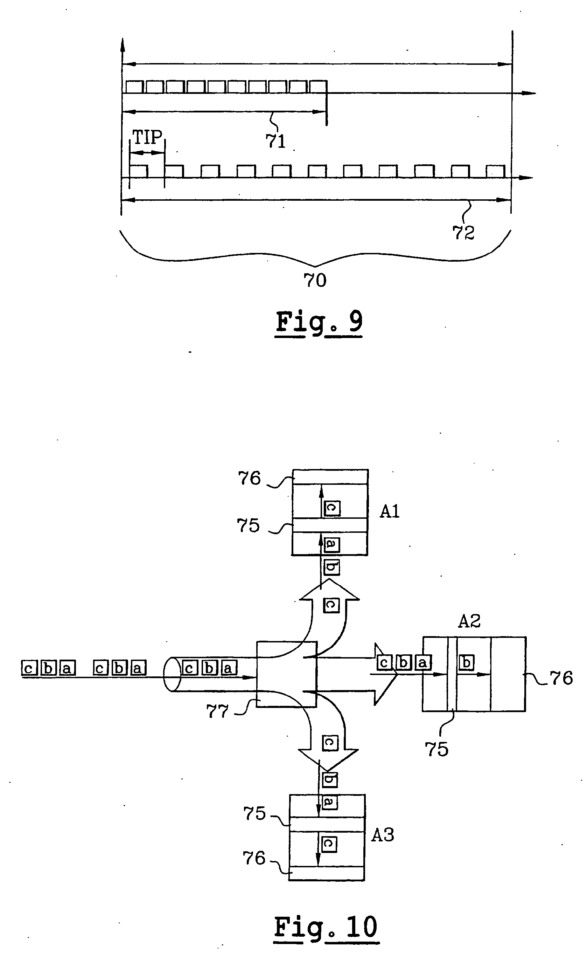

La figure 9 illustre ainsi deux exemples de répartition de paquets dans une séquence 70 :

- une répartition 71 de 10 paquets séparés par 1 bit,
- une répartition uniforme 72 de 10 paquets. Le fait d'indiquer que le temps minimum inter-paquet est de 100 ms permet de donner l'enveloppe maximum du trafic sur ce lien virtuel et de par la taille du paquet déduire la bande passante qui est donnée par la formule :

$$\frac{\text{Taille du paquet}}{\text{Temps minimum inter - paquet}} = \text{Bande passante du lien virtuel}$$

L'affectation, d'une bande passante (BP) et d'un temps inter paquet (TIP) pour un lien virtuel ne veut pas dire que des paquets vont être systématiquement émis sur le lien virtuel tous les temps TIP et occuper toute la bande passante allouée. Ces paquets ne sont émis sur le lien virtuel que lorsqu'une application abonné les met à disposition à l'émission dans ce lien virtuel.

2) La fonction de filtrage dans un lien virtuel en réception

Sur un même lien virtuel, un abonné en réception peut affiner la sélection des paquets en utilisant les informations d'adressage réseaux contenues dans le paquet. Ce mode de filtrage, qui utilise une notion de sous-liens virtuels, donne une plus grande souplesse pour la définition et l'utilisation des liens virtuels en évitant la création de liens virtuels spécifiques.

La figure 10 donne un exemple de lien virtuel qui supporte un train de trois types de paquets (a, b et c). Chaque abonné peut filtrer (75) suivant ses besoins les paquets (abonné A1 : paquet a ; abonné A2 : paquet b ; et abonné A3 : paquet c).

Performances du réseau de l'invention

Les performances du réseau de l'invention se déclinent de quatre manières :

- intégrité des données,
- disponibilité du réseau,
- déterminisme du réseau,
- acheminement de bout en bout des données.

1) Intégrité des données

L'intégrité des données est assurée sur chaque paquet par un CRC ("Cyclic Redundancy Check") qui permet par un calcul de valider les données transmises dans le paquet. Le CRC est situé en fin de paquet et il correspond à l'ensemble des bits du paquet (informations réseaux plus les informations utiles).

Dans le réseau, un paquet est vérifié à chaque entrée d'équipement du réseau, pour permettre de détruire tout mauvais paquet afin qu'il ne soit pas utilisé, afin de libérer de la bande passante et afin d'éviter d'encombrer inutilement les commutateurs.

2) Disponibilité du réseau

Le réseau est partagé par plusieurs systèmes pour les communications. Sa disponibilité a donc un impact non négligeable sur la disponibilité globale.

La redondance réseau, qui consiste à doubler le réseau, chaque abonné ayant une connexion à chacun des deux réseaux, un des deux paquets étant sélectionné à la réception, permet d'augmenter cette disponibilité.

Cette redondance réseau permet un fonctionnement même avec un commutateur ou des liens défaillants.

3) Déterminisme du réseau

Le réseau est un réseau déterministe ce qui signifie que tout paquet, appartenant à un lien virtuel pour une bande passante allouée, est assuré d'accéder au réseau et d'être transmis aux équipements récepteurs avec un temps de latence borné (temps de transit maximum du paquet).

Pour un lien virtuel le calcul de latence maximum est donné par la formule :

$$\text{Temps de latence d'un lien virtuel} = TA_E + TTE + (NS \times TTS) + TTR + TA_R$$

Avec

- TTE : temps de traversée en émission de la pile de communication, qui correspond au temps de mise en forme en paquet dans les services de communication. Ce temps est identique pour tous les liens virtuels, et est dépendant du matériel supportant l'application.
- $TA_E$ : temps d'accès à l'émission. La bande passante allouée est donnée sous la forme d'une bande passante maximum et d'un temps minimum entre deux paquets consécutifs (temps inter-paquet : TIP). L'envoi des paquets dans un lien virtuel étant asynchrone par rapport à l'application, si un paquet vient juste d'être émis, on doit attendre un temps TIP pour accéder au réseau : ainsi $TA_E$ < TIP dans tous les cas.
- NS : nombre de commutateurs traversé par le lien virtuel,
- TTS : temps maximum de traversée d'un commutateur par un paquet,
- TTR : temps de traversée en réception de la pile de communication, qui correspond au temps TTE mais en réception. Ce temps en compte le temps de réception des paquets par les services. Il est identique pour tous les liens virtuels, et est dépendant du matériel supportant l'application.
- $TA_R$ : temps d'accès en réception. Lorsqu'un paquet est reçu par un abonné, il est mis à disposition de l'application à travers une "boîte à lettres". On a au maximum : $TA_R$ = TIP.

Les temps $TA_E$ et $TA_R$ sont dus à l'asynchronisme qui existe entre les applications et le réseau à l'émission et à la réception.

Indépendamment des liens virtuels, pour le temps de transfert d'un paquet, une première estimation donne au maximum :

$$TTE = 0,5 \text{ ms}$$

$$TTR = 0,5 \text{ ms}$$

$$\text{TTS} = 1 \quad \text{ms}$$

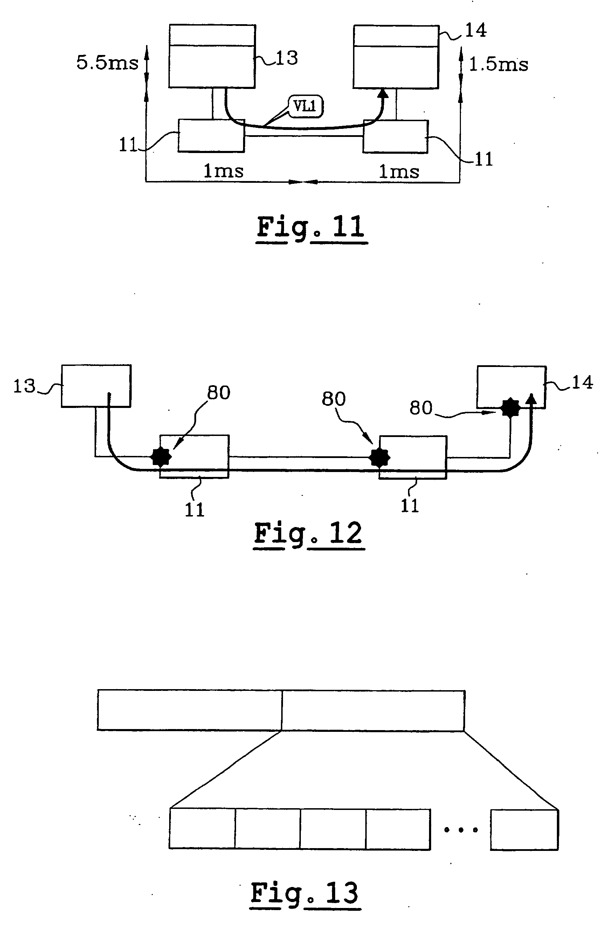

Dans l'exemple illustré sur la figure 11, dans lequel on reprend les références de la figure 2, on obtient :

Pour le lien virtuel VL1 allant de l'équipement 13 à l'équipement 14 au travers de deux commutateurs 11, si le temps TIP = 5 ms, la périodicité de lecture = 1 ms, on a :

$$\text{TA}_E = 5 \text{ ms}$$

$$\text{NS} = 2$$

$$\text{TA}_R = 1 \text{ ms}$$

Temps de latence d'un lien virtuel = 9 ms

4) Acheminement de bout en bout des données

Le réseau de l'invention assure à chaque paquet un cheminement unique de bout en bout grâce aux liens virtuels.

Au niveau de chaque abonné, tout paquet est affecté, à l'émission, à un lien virtuel prédéfini par configuration. Ce paquet contient, dans sa partie adressage, l'identification du lien virtuel. C'est cette identification qui est utilisée pour le cheminement dans le réseau.

Sur tout le cheminement du paquet, à chaque traversée d'un commutateur, un service vérifie si ce paquet est autorisé à passer. De même à la réception un service vérifie l'appartenance du paquet à un lien virtuel autorisé en réception. Si ce n'est pas le cas le paquet est détruit.

La figure 12 illustre un exemple de vérification d'un paquet du lien virtuel VL1 de la figure 10. Cette vérification a lieu aux points 80.

**Exemple de mise en oeuvre du réseau de l'invention dans le domaine avionique**

Dans cet exemple de mise en oeuvre, plusieurs caractéristiques du réseau de l'invention ont été précisées, afin de simplifier et de normaliser l'emploi de celui-ci dans le domaine avionique.

Caractéristiques des liens virtuels

1) Nombre de liens virtuels

Suivant le nombre de liens virtuels en émission et réception, on définit trois classes d'abonnés :

* abonné gros consommateur,
* abonné moyen consommateur,
* abonné petit consommateur.

Une telle répartition est donnée dans le tableau 1 situé en fin de description.

2) Bande passante des liens virtuels

Chaque lien virtuel a une bande passante allouée qui est donnée par le temps minimum entre deux paquets (TIP) et la taille du paquet. Le TIP est donné par la formule :

TIP = 1 ms $\times$ $2^k$ avec K entier de 0 à 7 ; soit 1 ms, 2 ms, 4 ms, 8 ms, 16 ms, 32 ms, 64 ms, et 128 ms.

Par définition pour chaque lien virtuel, quatre tailles maximum de paquet ont été définies : 16 octets, 98 octets, 226 octets et 482 octets. Cette taille indique uniquement les données utiles du paquet, utilisées directement par les applications. Pour le calcul de la bande passante, les données d'informations réseaux sont également prises en compte.

Dans le tableau 2 situé en fin de description sont données, pour chaque taille de paquets (charge utile) et pour chaque temps TIP, les bandes passantes effectives sur le réseau pour un lien virtuel.

Le besoin en bande passante en émission des équipements sur avion est faible (<400 Kbit/s). Aussi, on donne une borne supérieure en émission qui se résume par la règle : la somme des bandes passantes en émission des liens virtuels VL doit être inférieure à 5 Mbit/s. On peut ainsi avoir en émission :

- un abonné avec 10 liens virtuels de 16 octets à 2 ms (ce qui donne 3,36 Mbit/s), ou
- un abonné avec 5 liens virtuels de 16 octets à 2 ms et 10 liens virtuels de 226 octets à 16 ms et 1 lien virtuel de 226 octets à 4 ms (ce qui donne 4, 778 Mbit/s).

Pour allouer une bande passante à un lien virtuel, on doit identifier un besoin réel en terme de fréquence d'émission de données et de volume.

Les marges sur la bande passante sont données de deux manières, soit par la duplication du lien virtuel, soit par une marge effective sur la bande passante du lien virtuel. Dans ce dernier cas on peut :

- allouer une taille utile plus importante que son besoin,
- allouer un temps TIP plus petit, qui permet d'augmenter la fréquence d'émission des paquets, par exemple si le temps TIP passe de 16 ms à 8 ms, on double le nombre de paquets par seconde,
- une combinaison de taille utile et de temps TIP.

3) Mode des liens virtuels

Trois modes de transfert ont été définis précédemment "sampling", "queueing" et "transfert de fichier". Afin de faciliter les définitions des liens virtuels, chaque lien virtuel est utilisé soit en mode "sampling", soit en mode "queueing" ou soit en mode "transfert de fichier".

4) Filtrage

La possibilité de filtrage dans un lien virtuel permet, pour certains équipements, d'éviter un nombre trop important de liens virtuels en émission et en réception (si même émetteur). On peut par ce moyen regrouper plusieurs liens virtuels en un seul et définir des "sous-liens virtuels", les paquets étant sélectionnés par une information réseau contenue dans le paquet. Le filtrage donne une plus grande flexibilité sur l'utilisation des "tuyaux" de communication et permet une optimisation de leurs utilisations.

Structure et format de la charge utile

Le terme "structure" précise l'agencement de la charge utile (données transmises et reçues par les applications) dans le paquet.

Le terme "format" spécifie le type de la donnée (entier, binaire, etc.).

La structure du paquet et le format des données ne sont pas imposés par le standard Ethernet (contrairement au standard ARINC 429) ; cependant, les règles suivantes sont respectées dans l'exemple considéré.

Comme illustré sur la figure 13, la charge utile comprend :

- la validité fonctionnelle (VF) valable pour toutes les données du paquet,
- les données proprement dites, codées selon un format standardisé.

L'agencement des données proprement dites est à définir d'un commun accord entre émetteur et destinataires.

1) Validité fonctionnelle

La validité fonctionnelle est calculée par l'émetteur et est utilisée par le(s) récepteur(s) pour déterminer quel niveau de confiance accorder au paquet transmis. La validité fonctionnelle est codée sur les quatre premiers octets du paquet.

La validité fonctionnelle est en quelque sorte le pendant des "SSM" utilisés dans le standard aéronautique ARINC 429. Il y a cependant des différences majeures :

- Cette validité fonctionnelle est purement fonctionnelle, c'est-à-dire qu'elle ne reflète que l'état des données déterminées par l'application émettrice et non celui des ressources qui la supportent.

- La validité fonctionnelle peut prendre les valeurs suivantes :

  - NO : "Normal Operation"
  - NCD : "No Computed Data"
  - FTF : "Functional Test"

- La validité des ressources du fait de la distanciation entre application et ressource, ne peut être gérée par la validité fonctionnelle.

2) Format des données

Afin de banaliser les échanges, les données sont codées suivant un format prédéfini. Celui-ci est le plus proche possible du format "informatique", manipulé par les compilateurs et microprocesseurs, et ce, afin de toujours éviter au maximum les transformations de format à la charge des applicatifs.

Les formats retenus font l'objet de la règle de codage illustrée dans le tableau 3 en fin de description.

3) Regroupement des données

Le protocole Ethernet est d'autant plus efficace que les informations transmises sont relativement longues. On a donc tout intérêt à regrouper des données pour qu'elles soient envoyées en une seule fois pour en assurer la cohérence et l'intégrité.

Des critères de regroupement des données peuvent être les suivants :

- même mode de transfert
- même période de rafraîchissement,
- affinité fonctionnelle,
- même gestion de la validité fonctionnelle.

Démarche de conception et de dimensionnement du réseau

Afin de pouvoir effectuer une démarche de conception et de dimensionnement du réseau, il est essentiel de définir, au moins d'un point de vue communication, l'architecture matérielle et logicielle des abonnés.

Ceci passe par une phase de conception du système et de l'architecture du réseau qui doit clairement identifier :

- les équipements physiquement interfacés sur le bus, hors redondance,
- les applications abonnés émettrices et réceptrices vues du réseau,
- les liens virtuels en tant qu'éléments à part entière de l'architecture du réseau avec sa topologie.

Les systèmes doivent prendre en compte les essais et si nécessaire définir des liens virtuels spécifiques permettant de transférer des données vers les moyens d'instrumentation essais.

Pour chaque équipement matériel on doit avoir :

- son identification : nom du module ou de l'équipement,
- sa position dans l'architecture avion.

Pour chaque application abonné on doit avoir :

- son identification : nom de la fonction,
- sa description : un commentaire,
- son "mapping" sur équipement matériel dans l'architecture avion,
- l'identification de l'interface logique.

En effet, un équipement, voire un équipement externe à l'avion, installation d'essais, etc... peut supporter plusieurs abonnés ayant chacun une ou plusieurs interfaces logiques vers un ou plusieurs sous réseaux.

Pour chaque lien virtuel on doit avoir :

- son identification : nom du lien virtuel,
- le type d'information transmis sous forme d'un commentaire,

- le nom de l'application émettrice,
- les noms des applications réceptrices,
- son cheminement sur équipement matériel dans l'architecture avion sous la forme de la liste des commutateurs traversés tel qu'identifiés dans l'architecture,
- la bande passante utile (bits/s),
- la taille des paquets : la taille des paquets peut être fixe ou variable dans un lien virtuel, il faut donner la taille maximum,
- le temps TIP,
- la justification de la bande passante, la taille des paquets et du temps TIP,
- le mode d'utilisation : Pour le mode "queueing", on peut préciser si le paquet est de taille supérieure à 482 octets,
- la latence maximum.

La définition des liens virtuels est de la responsabilité du système émetteur. Celui-ci doit s'assurer que les équipements en réception prennent en compte les liens virtuels.

Moyens utilisés

Une base de données supporte cette partie du processus en permettant de définir :

- l'architecture matérielle du système avec l'ensemble des ressources et les câblages,
- les abonnés (composants) et leur "mapping" sur l'architecture matérielle,
- les liens virtuels du système avec leurs routages.

Mise en oeuvre d'une pile de communication dans un équipement

Une telle pile doit permettre à tout abonné de s'interfacer avec le réseau de communication.
Trois approches sont possibles pour l'intégration de cette fonction dans l'équipement abonné :

- une carte autonome couvrant l'ensemble des besoins de communication et pouvant s'interfacer simplement par l'intermédiaire d'un bus au reste de l'équipement,
- une liste de composants nécessaires et le logiciel intégrable dans l'équipement cible,
- une spécification d'interopérabilité abonné avec son plan de validation permettant de s'assurer de la conformité du développement fournisseur avec les exigences fonctionnelles requises.

Tableau 1

| Classe d'abonné | Nombre de liens virtuels en émission | Nombre de liens virtuels en réception |
|---|---|---|
| Gros consommateur | 32 | 128 |
| Moyen consommateur | 16 | 64 |
| Petit consommateur | 8 | 32 |

Tableau 2

| Octet | 1 ms | 2 ms | 4 ms | 8 ms | 16 ms | 32 ms | 64 ms | 128 ms |
|---|---|---|---|---|---|---|---|---|
| Utile | Bande passante réelle sur le réseau | | | | | | | |
| 16 | 672 000 | 336 000 | 168 000 | 84 000 | 42 000 | 21 000 | 10 500 | 5 250 |
| 98 | 1 328 000 | 664 000 | 332 000 | 166 000 | 83 000 | 41 500 | 20 750 | 10 375 |
| 226 | 2 352 000 | 1 176 000 | 588 000 | 294 000 | 147 000 | 73 500 | 36 750 | 18 375 |
| 482 | 4 400 000 | 2 200 000 | 1 100 000 | 550 000 | 275 000 | 137 500 | 68 750 | 34 375 |

16 Ots= 64 OtS$_{Trame Ethernet}$ 18 OtS$_{En-tête Eth.}$- 28 OtS$_{En-tête UDP/IP}$- 2 0tS$_{champ Redondance}$
98 Ots=146 OtS$_{Trame Ethernet}$ - 18 OtS$_{En-tête Eth.}$ - 28 OtS$_{En-tête UDP/IP}$- 2 OtS$_{Champ Redondance}$
226 OtS=274 OtS$_{Trame Ethernet}$ - 18 OtS$_{En-tête Eth.}$ - 28 OtS$_{En-tête UDP/IP}$- 2 OtS$_{Champ Redondance}$
482 OtS=530 OtS$_{Trame Ethernet}$ - 18 Ots$_{En-tête Eth}$- 28 OtS$_{En-tête UDP/IP}$- 2 OtS$_{Champ Redondance}$

Tableau 3

| Type | Format standardisé |
|---|---|
| Caractère | Caractère ASCII 8 bits signé (Arinc 653) |
| Entier | Entier 32 bits signé (Arinc 653) |
| Entier non signé | Entier 32 bits non signé (Arinc 653) |
| Booléen | Entier 32 bits non signé avec info dans LSB |
| Réel | Flottant 32 bits selon IEEE 303 |
| Type propriétaire | Format non géré par les IOF |

## Revendications

**1.** Réseau de communication de type Ethernet full-duplex commuté comprenant au moins un équipement abonné source (13) et au moins un équipement abonné destinataire (14) reliés entre eux par au moins un lien physique au travers d'au moins un commutateur et par au moins un lien virtuel (VL), qui est la représentation conceptuelle d'une liaison d'un équipement source (13) vers au moins un équipement destinataire (14), **caractérisé en ce** chaque équipement source (13), émetteur de trames Ethernet, comporte :

- des moyens (32) de ségrégation entre les liens virtuels et d'allocation d'une bande passante par lien virtuel,
- des moyens (33) de multiplexage des liens virtuels sur le lien physique issu de cet équipement, chaque trame émise possédant un champ qui identifie le lien virtuel auquel elle appartient,

et en ce qu'un lien virtuel (VL) est **caractérisé par** :

- un sens de transfert, le lien virtuel étant mono-directionnel,
- un équipement source (13),
- un ou plusieurs équipements destinataires (14),
- une bande passante figée,
- un temps maximum garanti de transfert des paquets d'un équipement source (13) vers un équipement destinataire (14), quel que soit le comportement du reste du réseau, chaque lien virtuel ayant son propre temps de transfert,
- un chemin figé sur le réseau,
- un identifiant unique.

**2.** Réseau selon la revendication 1, dans lequel chaque équipement destinataire (14) comporte des moyens pour s'abonner en réception a au moins un lien virtuel et d'assurer la ségrégation entre liens virtuels jusqu'à une application.

**3.** Réseau selon l'une quelconque des revendications 1 et 2, dans lequel chaque commutateur (11) comprend des moyens de contrôle de bande passante entrante pour chaque lien virtuel.

**4.** Réseau selon la revendication 3, dans lequel chaque commutateur (11) connaît, par une table de configuration statique, les liens virtuels qu'il doit commuter ainsi que le nombre de paquets autorisés pour un lien virtuel.

**5.** Réseau selon la revendication 4, dans lequel chaque commutateur (11) comprend :

- des moyens pour configurer de façon séparée chaque port d'entrée afin d'indiquer pour chaque trame Ethernet reçue vers quels ports de sortie elle doit être dirigée en fonction de l'identifiant du lien virtuel,
- des moyens pour surveiller le flux de trames Ethernet associé à chaque lien virtuel qui traverse celui-ci,
- des moyens pour remettre en forme le flux de chaque lien virtuel,
- des moyens de multiplexage des flux des liens virtuels sur chaque port de sortie.

**6.** Réseau selon la revendication 5, dans lequel chaque commutateur (11) comprend successivement :

- un port d'entrée (41),
- des moyens de contrôle de flux (42),
- un moteur de commutation supportant des transferts multidestinataires (43),
- des moyens de contrôle de flux (44),
- des moyens de remise en forme de flux (45),
- des moyens de multiplexage des liens virtuels (46),
- un port de sortie (47).

**7.** Réseau selon l'une quelconque des revendications précédentes, dans lequel on réalise une redondance réseau, qui consiste à doubler le réseau, chaque abonné ayant une connexion à chacun des deux réseaux.

**8.** Procédé de mise en oeuvre d'un réseau de communication de type Ethernet full-duplex commuté comprenant au moins un équipement abonné source (13) et au moins un équipement abonné destinataire (14) reliés entre eux par au moins un lien physique au travers d'au moins un commutateur et par au moins un lien virtuel (VL), qui est la représentation conceptuelle d'une liaison d'un équipement source (13) vers au moins un équipement destinataire (14), dans lequel, dans un service d'émission, on permet à une application (52) d'accéder aux liens virtuels en émission , ce service permettant de multiplexer les liens virtuels vers un lien physique (53) au travers d'un interface Ethernet (54), et, pour chaque lien virtuel d'émettre les paquets en fonction de la bande passante allouée à celui-ci, **caractérisé en ce que** dans un service de protection de bande passante dans le commutateur, on vérifie pour chaque lien virtuel entrant, les caractéristiques temporelles des paquets et, en cas de dépassement des caractéristiques permises, on détruit les paquets pour éviter qu'une défaillance au niveau d'un émetteur ou d'un lien virtuel ne vienne compromettre le trafic dans les autres liens virtuels partant de ce commutateur, et **en ce qu'**un lien virtuel (VL) est **caractérisé par** :

- un sens de transfert, le lien virtuel étant mono-directionnel,
- un équipement source (13),
- un ou plusieurs équipements destinataires (14),
- une bande passante figée,
- un temps maximum garanti de transfert des paquets d'un équipement source (13) vers un équipement destinataire (14), quel que soit le comportement du reste du réseau, chaque lien virtuel ayant son propre temps de transfert,
- un chemin figé sur le réseau,
- un identifiant unique.

**9.** Procédé selon la revendication 8, dans lequel, dans un service de réception (55), on décode les paquets, on vérifie leur bon format et on met les données utiles à la disposition des applications.

**10.** Procédé selon la revendication 8, dans lequel, dans un service (60) de redondance réseau au niveau abonné, on envoie et on reçoit un paquet sur deux liens virtuels afin de mettre en oeuvre une redondance réseau, la duplication du réseau, qui est transparente pour les applications, permettant ainsi de se prémunir d'une panne d'un commutateur ou d'une interface.

**11.** Procédé selon la revendication 8, dans lequel, dans un service "sampling", l'équipement destinataire ne présente à l'utilisateur que la dernière valeur reçue, et dans lequel on écrase systématiquement la dernière valeur par le nouveau paquet reçu.

**12.** Procédé selon la revendication 8, dans lequel, dans un service "queueing", l'équipement destinataire présente à l'utilisateur toutes les données qu'il reçoit, ce service permettant :

- un envoi d'informations que le destinataire ne veut pas perdre,
- un envoi de données supérieur à la taille maximum du paquet du lien virtuel, le service d'émission découpant alors ces données en paquet, le service de réception reformant les données pour le mettre à disposition de l'application réceptrice.

**13.** Procédé selon la revendication 8, dans lequel, dans un service de "transfert de fichier", on transfère un fichier de données, le service d'émission découpant ce fichier en paquets qui sont ensuite transmis séquentiellement, le service de réception reconstruisant ce fichier.

**14.** Procédé selon l'une quelconque des revendications 8 à 13, dans lequel on affecte une bande passante et un temps inter-paquet pour chaque lien virtuel.

**15.** Procédé selon la revendication 14, dans lequel, sur un même lien virtuel, un abonné en réception affine la sélection des paquets en utilisant les informations d'adressage réseaux contenues dans le paquet.

**16.** Procédé selon la revendication 15, dans lequel, l'intégrité des données étant assurée sur chaque paquet par un CRC qui permet par un calcul de valider les données transmises dans le paquet, on vérifie chaque paquet à chaque entrée d'équipement du réseau, et on détruit tout mauvais paquet.

**Claims**

**1.** Switched full-duplex Ethernet type communication network comprising at least one source subscriber equipment (13) and at least one destination subscriber equipment (14) connected to each other through at least one physical link through at least one switch and through at least one virtual link (VL), which is the conceptual representation of a link from a source equipment (13) to at least one destination equipment (14), **characterized in that** each source equipment (13) that transmits Ethernet frames comprises:

- means (32) of segregation between virtual links and means of allocating a passband for each virtual link,
- means (33) of multiplexing the virtual links on the physical links output from this equipment, each transmitted frame having a field that identifies the virtual link to which it belongs,

and **in that** a virtual link (VL) is **characterized by**:

one transfer direction, the virtual link being monodirectional,
a source equipment (13),
one or more destination equipments (14),
a fixed passband,
a maximum guaranteed time for the transfer of packets from a source equipment (13) to a destination equipment (14), no matter what the behaviour of the remainder of the network, each virtual link having its own transfer time,
a fixed path on the network,
a single identifier.

**2.** Network according to claim 1, in which each destination equipment (14) comprises means of subscribing in reception to at least one virtual link and making the segregation between virtual links as far as the application.

**3.** Network according to any one of claims 1 and 2, in which each switch (11) comprises means of controlling the incoming passband for each virtual link.

**4.** Network according to claim 3, in which each switch (11) knows the virtual links that it has to switch and the number of authorized packets for a virtual link, by means of a static configuration table.

**5.** Network according to claim 4, in which each switch (11) comprises:

- means of configuring each input port separately to indicate the output ports to which each Ethernet frame must be directed as a function of the identifier of the virtual link,
- means of monitoring the flow of Ethernet frames associated with each virtual link that passes through the switch,
- means of reformatting the flow in each virtual link,
- means of multiplexing flows in virtual links an each output port.

**6.** Network according to claim 5, in which each switch (11) comprises the following in sequence:

- an input port (41),
- flow control means (42),
- a switching motor supporting multidestination transfers (43),
- flow control means (44),
- flow reformatting means (45)

- virtual link multiplexing means (46),
- an output port (47).

7. Network according to any one of the previous claims, in which network redundancy is achieved which consists of doubling up the network, each subscriber having a connection to each of the two networks.

8. Process for implementation of a switched full-duplex Ethernet type communication network comprising at least one source subscriber equipment (13) and at least one destination subscriber equipment (14) connected to each other through at least a physical link through at least one switch and through at least one virtual link (VL) which is the conceptual representation of a link from a source equipment (13) to at least one destination equipment (14), wherein in a transmission service, an application (52) is allowed to access virtual links in transmission, this service being capable of multiplexing virtual links to a physical link (53) through an Ethernet interface (54), and for each virtual link sending the packets as a function of the passband allocated to it, **characterized in that** the time characteristics of the packets are checked in a passband protection service in the switch, for each incoming virtual link, and if the allowable characteristics are exceeded, the packets are destroyed to prevent a failure in a transmitter or a virtual link from compromising traffic in other virtual links leaving this switch, and **in that** a virtual link (VL) is **characterized by**:

- one transfer direction, the virtual link being monodirectional,
- a source equipment (13),
- one or more destination equipments (14),
- a fixed passband,
- a guaranteed maximum time for the transfer of packets from a source equipment (13) to a destination equipment (14), no matter what the behaviour of the remainder of the network, each virtual link having its own transfer time,
- a fixed path on the network,
- a single identifier.

9. Process according to claim 8, in which packets are decoded in a reception service (55), it is checked that their format is correct, and useful data are made available to applications.

10. Process according to claim 8 in which a packet is sent and received on two virtual links, in a network redundancy service (60) at subscriber level, in order to implement network redundancy, the network duplication, that is transparent for applications thus avoiding problems caused by the failure of a switch or an interface.

11. Process according to claim 8, in which the destination equipment in a "sampling" service only presents the last received value to the user, and in which the last value is systematically overwritten by the new received packet.

12. Process according to claim 8, in which in a "queuing" service, the destination equipment presents all data that it receives to the user, this service enabling:

- sending information that the addressee does not want to lose,
- sending information larger than the maximum packet size of the virtual link, the transmission service then breaking down these data into packets, the reception service reformatting the data to make them available to the receiving application.

13. Process according to claim 8, in which a data file is transferred in a "file transfer" service, the transmission service breaking this file down into packets that are then transmitted sequentially, the reception service rebuilding this file.

14. Process according to any one of claims 8 to 13, in which a passband and an inter-packet time are assigned for each virtual link.

15. Process according to claim 14, in which a subscriber in reception refines the selection of packets on the same virtual link, by using network addressing information contained in the packet.

16. Process according to claim 15, in which data integrity 15 achieved on each packet by a CRC that makes a calculation to validate data transmitted in the packet, each packet is checked at each network equipment input, and all bad packets are destroyed.

**Patentansprüche**

1. Kommunikationsnetz des Typs kommutiertes Vollduplex-Ethernet, das wenigstens eine Quell-Teilnehmeranlage (13) und wenigstens eine Ziel-Teilnehmeranlage (14) umfasst, die durch wenigstens eine physikalische Verbindung über wenigstens einen Kommutator und durch wenigstens eine virtuelle Verbindung (VL), die die theoretische Darstellung einer Verbindung von einer Quellanlage (13) zu wenigstens einer Zielanlage (14) ist, miteinander verbunden sind, **dadurch gekennzeichnet, dass** jede Quellanlage (13), die ein Sender für Ethernet-Rahmen ist, umfasst:

   - Mittel (32) zum Entmischen zwischen den virtuellen Verbindungen und für die Zuweisung eines Durchlassbandes durch die virtuelle Verbindung,
   - Mittel (33) zum Multiplexieren der virtuellen Verbindungen auf der von dieser Anlage ausgehenden physikalischen Verbindung, wobei jeder ausgesendete Rahmen ein Feld besitzt, das die virtuelle Verbindung, zu der er gehört, identifiziert,

   und dass die virtuelle Verbindung (VL) **gekennzeichnet ist durch**:

   - eine Übertragungsrichtung, da die virtuelle Verbindung eindirektional ist,
   - eine Quellanlage (13),
   - eine oder mehrere Zielanlagen (14),
   - ein festes Durchlassband,
   - eine garantierte maximale Zeit für die Übertragung von Paketen von einer Quellanlage (13) zu einer Zielanlage (14) unabhängig vom Verhalten des restlichen Netzes, wobei jede virtuelle Verbindung ihre eigene Übertragungszeit hat,
   - einen festen Weg in dem Netz,
   - eine eindeutige Kennung.

2. Netz nach Anspruch 1, bei dem jede Zielanlage (14) Mittel umfasst, um für den Empfang wenigstens eine virtuelle Verbindung zu abonnieren und um die Entmischung zwischen den virtuellen Verbindungen bis zu einer Anwendung zu gewährleisten.

3. Netz nach einem der Ansprüche 1 und 2, bei dem jeder Kommutator (11) Steuermittel für das ankommende Durchlassband für jede virtuelle Verbindung umfasst.

4. Netz nach Anspruch 3, bei dem jeder Kommutator (11) durch eine statische Konfigurationstabelle die virtuellen Verbindungen, die er umschalten soll, sowie die Anzahl von Paketen, die für eine virtuelle Verbindung zugelassen sind, kennt.

5. Netz nach Anspruch 4, bei dem jeder Kommutator (11) umfasst:

   - Mittel zum getrennten Konfigurieren jedes Eingangs-Ports, um für jeden empfangenen Ethernet-Rahmen je nach Kennung der virtuellen Verbindung anzugeben, zu welchen Ausgangs-Ports er gelenkt werden soll,
   - Mittel zum Überwachen des Flusses der jeder virtuellen Verbindung zugeordneten Ethernet-Rahmen, der durch diese virtuelle Verbindung läuft,
   - Mittel, um den Fluss jeder virtuellen Verbindung neu zu formen,
   - Mittel für die Multiplexierung des Flusses der virtuellen Verbindungen an jedem Ausgangs-Port.

6. Netz nach Anspruch 5, bei dem jeder Kommutator (11) nacheinander umfasst:

   - einen Eingangs-Port (41),
   - Flusssteuermittel (42),
   - eine Kommutationsmaschine (43), die Übertragungen zu mehreren Zielen unterstützt,
   - Flusssteuermittel (44),
   - Mittel (45) zum Umformen des Flusses,
   - Mittel zum Multiplexieren der virtuellen Verbindungen (46),
   - einen Ausgangs-Port (47).

7. Netz nach einem der vorhergehenden Ansprüche, bei dem ein Redundanznetz verwirklicht ist, das darin besteht, das Netz zu verdoppeln, wobei jeder Teilnehmer eine Verbindung zu jedem der zwei Netze hat.

8. Verfahren zum Betreiben eines Kommunikationsnetzes des Typs kommutiertes Vollduplex-Ethernet, das wenigstens eine Teilnehmer-Quellanlage (13) und eine Teilnehmer-Zielanlage (14) umfasst, die durch wenigstens eine physikalische Verbindung über wenigstens einen Kommutator und durch wenigstens eine virtuelle Verbindung (VL), die die theoretische Darstellung einer Verbindung von einer Quellanlage (13) zu wenigstens einer Zielanlage (14) ist, miteinander verbunden sind, wobei in dem Verfahren in einem Sendedienst einer Anwendung (42) erlaubt wird, auf die virtuellen Verbindungen zum Senden zuzugreifen, wobei dieser Dienst ermöglicht, die virtuellen Verbindungen zu einer physikalischen Verbindung (53) über eine Ethernet-Schnittstelle (54) zu multiplexieren und für jede virtuelle Verbindung die Pakete in Abhängigkeit von dem ihr zugewiesenen Durchlassband auszusenden, **dadurch gekennzeichnet, dass** in einem Dienst für den Schutz des Durchlassbandes im Kommutator für jede ankommende virtuelle Verbindung die zeitlichen Eigenschaften der Pakete verifiziert werden und im Fall einer Überschreitung der erlaubten Eigenschaft die Pakete zerstört werden, um zu vermeiden, dass bei einem Fehler auf Seiten eines Senders oder einer virtuellen Verbindung der Verkehr in den anderen virtuellen Verbindungen, die von diesem Kommutator ausgehen, beeinträchtigt wird,
und dass eine virtuelle Verbindung (VL) **gekennzeichnet ist durch**:

- eine Übertragungsrichtung, da die virtuelle Verbindung eindirektional ist,
- eine Quellanlage (13),
- eine oder mehrere Zielanlagen (14),
- ein festes Durchlassband,
- eine garantierte maximale Zeit für die Übertragung von Paketen von einer Quellanlage (13) zu einer Zielanlage (14) unabhängig vom Verhalten des restlichen Netzes, wobei jede virtuelle Verbindung ihre eigene Übertragungszeit hat,
- einen festen Weg in dem Netz,
- eine eindeutige Kennung.

9. Verfahren nach Anspruch 8, bei dem in einem Empfangsdienst (55) die Pakete decodiert werden, ihr richtiges Format verifiziert wird und die Nutzdaten für Anwendungen zur Verfügung gestellt werden.

10. Verfahren nach Anspruch 8, bei dem in einem Redundanznetz-Dienst (60) auf Teilnehmerebene ein Paket auf zwei virtuelle Verbindungen geschickt bzw. auf diesen empfangen wird, um ein Redundanznetz zu betreiben, wobei die Verdoppelung des Netzes, die für die Anwendungen transparent ist, somit ermöglicht, sich vor einem Ausfall eines Kommutators oder einer Schnittstelle zu schützen.

11. Verfahren nach Anspruch 8, bei dem in einem "Sampling"-Dienst die Zielanlage nur den letzten empfangenen Wert angibt und bei dem der letzte Wert durch das empfangene neue Paket systematisch gelöscht wird.

12. Verfahren nach Anspruch 8, bei dem in einem "Queueing"-Dienst die Zielanlage dem Anwender alle Daten, die sie empfängt, angibt, wobei dieser Dienst ermöglicht:

- das Schicken von Informationen, die der Empfänger nicht verlieren möchte,
- das Schicken von Daten, die größer als die maximale Größe des Pakets der virtuellen Verbindung sind, wobei der Sendedienst dann diese Daten in Pakete zerschneidet, wobei der Empfangsdienst die Daten umformt, um sie für die Empfangsanwendung zur Verfügung zu stellen.

13. Verfahren nach Anspruch 8, bei dem in einem "Dateiübertragungs"-Dienst eine Datendatei übertragen, wird, wobei der Sendedienst diese Datei in Pakete zerschneidet, die anschließend sequentiell übertragen werden, wobei der Empfangsdienst diese Datei wiederherstellt.

14. Verfahren nach einem der Ansprüche 8 bis 13, bei dem für jede virtuelle Verbindung ein Durchlassband und eine Zeit zwischen Paketen vorgesehen sind.

15. Verfahren nach Anspruch 14, bei dem auf derselben virtuellen Verbindung ein empfangender Teilnehmer die Auswahl der Pakete **dadurch** verfeinert, dass er die in dem Paket enthaltenen Netzadressierungsinformationen verwendet.

16. Verfahren nach Anspruch 15, bei dem dann, wenn die Integrität der Daten in jedem Paket durch einen CRC gewährleistet ist, der durch Berechnung die Validierung der in jedem Paket gesendeten Daten ermöglicht, jedes Paket an jedem Anlageneingang des Netzes verifiziert wird und jedes schlechte Paket zerstört wird.

<u>**Fig. 1**</u>

<u>**Fig. 2**</u>

<u>**Fig. 3**</u>

**Fig. 4A**

**Fig. 4B**

**Fig. 5**

Fig. 6

Fig. 7

Fig. 8

**Fig. 9**

**Fig. 10**

5.5ms

13

VL1

14

1.5ms

11

1ms                    1ms

11

**Fig. 11**

13

80                    80            80

14

11                    11

**Fig. 12**

• • •

**Fig. 13**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0835009 A

- WO 9953719 A